# EUROPÄISCHE PATENTSCHRIFT

(11) **EP 3 813 217 B1**
(45) Veröffentlichungstag und Bekanntmachung des Hinweises auf die Patenterteilung: **19.08.2026**
(21) Anmeldenummer: 20201957.6
(22) Anmeldetag: 15.10.2020
(51) Int. Cl.: H02J 3/04, H02H 9/00, H02J 4/00

(54) **EIGENSICHERE ENERGIEÜBERTRAGUNGSEINHEIT ZUR VERSORGUNG EINES ELEKTROGERÄTS MIT ERHÖHTER LEISTUNG**
INTRINSICALLY SAFE POWER TRANSMISSION UNIT FOR SUPPLYING AN ELECTRIC DEVICE WITH INCREASED POWER
UNITÉ DE TRANSMISSION D'ÉNERGIE À SÉCURITÉ INTRINSÈQUE PERMETTANT DE FOURNIR UN APPAREIL ÉLECTRIQUE À PUISSANCE AUGMENTÉE

(30) Priorität: 21.10.2019 DE 102019007297
(43) Veröffentlichungstag der Anmeldung: 28.04.2021
(73) Patentinhaber: Dräger Safety AG & Co. KGaA, 23560 Lübeck (DE)
(72) Erfinder: Sürig, Andreas, 23558 Lübeck (DE)
(74) Vertreter: Weber-Lehn, Christian

(56) Entgegenhaltungen:
- CN-A- 107 534 290
- CN-A- 109 937 459
- CN-U- 205 194 370
- CN-U- 209 119 755

## Beschreibung

Die Erfindung betrifft ein eigensicheres Energieübertragungssubsystem zur Versorgung eines Elektrogeräts mit erhöhter Leistung, geeignet für explosionsgefährdete Bereiche. Das Energieübertragungssubsystem umfasst eine Leitungsverbindung und ist ausgebildet zur eigensicheren Übertragung von elektrischer Leistung über die Leitungsverbindung von einer Energiequelle zu dem Elektrogerät.

In besonderen Anwendungsfällen werden Elektrogeräte in explosionsgefährdeten Bereichen eingesetzt, beispielsweise dort, wo brennbare Gase, Stäube oder andere explosionsfähige Stoffe vorhanden sein können. Um eine Explosionsgefahr zu vermeiden, darf weder das Elektrogerät noch dessen Energieversorgung eine Zündquelle für eine Explosion bilden. Dazu müssen in explosionsgefährdeten Bereichen installierte oder befindliche Geräte nach bestimmten Zündschutzarten gebaut sein.

Die in einschlägigen nationalen und internationalen Normen und Richtlinien definierten Regeln des Explosionsschutzes legen verschiedene Zündschutzarten fest, in die elektrische Geräte abhängig von dem für sie jeweils geltenden Explosionsschutz klassifiziert werden. Vorteilhaft ist in vielen Fällen die Anwendung der Zündschutzart "Eigensicherheit", abgekürzt durch das Symbol "Ex-i". Bei ihr werden Spannungen, Ströme und Leistungen so begrenzt, dass keine Zündfunken oder gefährliche Erwärmungen entstehen können. Dabei ist die Begrenzung so gewählt, dass die Mindestenergie und Zündtemperatur eines explosiven Gemischs nicht erreicht werden. Eigensichere elektrische Betriebsmittel enthalten nur Stromkreise, die den Anforderungen an eigensichere Stromkreise genügen. Für eigensichere Stromkreise kommen nur Stromkreise mit geringer Leistung in Betracht. Dabei sind Spannungen, Ströme und Leistungen so begrenzt, dass keine zündfähigen Funken oder gefährliche Erwärmungen entstehen können. Hierbei gibt es zwei technische Ausführungen, nämlich "Ex ia" und "Ex ib". "Ex ia" vermittelt besonders hohe, "Ex ib" hohe Sicherheit. Die technische Ausführung wird beispielsweise in der Norm IEC 60079-11 beschrieben.

Wegen der Begrenzungen in Bezug auf Spannungen, Ströme und entsprechend auch auf Leistungen hat sich unter anderem die Versorgung von Messfühlern über lange Leitungen als schwierig erwiesen, insbesondere dann, wenn diese mehr als die sicherheitstechnisch zulässige Leistung benötigen. Im Fall der Zündschutzart "Ex ia" ergibt sich, abhängig von den jeweiligen konkreten Werten für Strom, Spannung, Leitungsbelägen und weiteren Geräteparametern, in der Praxis häufig eine Leistungsbegrenzung auf Werte im Bereich von etwa 2 Watt.

Wird zur Versorgung eines Elektrogeräts mehr als die bei gegebener Spannung und Stromlage laut Norm IEC 60079-11 spezifizierte zulässige Leistung benötigt, bietet seit einiger Zeit die Anwendung des in der Norm IEC 60079-39 genannten Verfahrens Abhilfe. Dieses Verfahren sieht vor, einen Kurzschluss oder eine Unterbrechung der Leitung zu detektieren, und dann den Energieeintrag zu unterbrechen, bevor es zu einer Explosion kommen kann. Das Verfahren verlangt verhältnismäßig viel Aufwand. Wegen der dazu erforderlichen elektronischen Strombegrenzungen, Hilfsschaltungen und Entkoppelnetzwerke wird nur die niedrigere Zündschutzart "Ex ib" erreicht. Für die höhere Zündschutzart "Ex ia" stellt es in der Regel keine Lösung dar.

Dokument CN 107 534 290 A beschreibt eine eigensichere Barriere mit mehreren Barriereschaltkreisen, die jeweils einen Kathodenknoten, einen Ausgabeknoten und einen Masseknoten aufweisen, wobei Zenerdioden parallel zwischen Kathodenknoten und Masseknoten geschaltet sind, und wobei Sperrdioden in Reihe zwischen Kathodenknoten und Ausgabeknoten geschaltet sind. Dokument CN 109 937 459 A beschreibt ein eigensicheres Verbundkabel mit einer Anzahl von Gerätekabeln, wobei mindestens ein Gerätekabel geschirmt ist und mindestens ein weiteres Gerätekabel nicht geschirmt ist. Dokument CN 209 119 755 U beschreibt ein explosionssicheres Wanddurchgangsterminal für eine Kohlebergbaumaschine. Dabei ist ein explosionsgeschütztes Gewinde in einer zylindrischen Oberfläche des explosionsgeschützten Gehäuses vorgesehen. An den beiden Enden der explosionsgeschützten Hülle sind zudem Drahtdurchführungsplatten angeordnet. Dokument CN 205 194 370 U beschreibt ein explosionsgeschütztes Steuerkabel mit verschiedenen Abschirmungsschichten.

Es besteht ein Bedarf nach einer eigensicheren Versorgung, mit der Elektrogeräte mit höherem als herkömmlicherweise eigensicher übertragbaren Leistungsbedarf dauerhaft ausreichend mit Leistung versorgt werden können.

Basierend darauf liegt der Erfindung die Aufgabe zugrunde, eine eigensichere Energieübertragung der eingangs genannten Art hinsichtlich der übertragbaren Leistung zu vergrößern.

Die erfindungsgemäße Lösung liegt in den Merkmalen der unabhängigen Ansprüche. Vorteilhafte Weiterbildungen sind Gegenstand der abhängigen Ansprüche.

Bei einem eigensicheren Energieübertragungssubsystem, geeignet für einen explosionsgeschützten Bereich zur Versorgung eines Elektrogeräts, das eine Leitungsverbindung umfasst und das zur eigensicheren Übertragung von elektrischer Leistung über die Leitungsverbindung von einer Energiequelle mit mehreren galvanisch getrennten Einzelquellen zu dem Elektrogerät ausgebildet ist, ist erfindungsgemäß vorgesehen, dass die Leitungsverbindung als Mehrfachleitung mit mehreren galvanisch getrennten und einzeln geschirmten Leiterpaaren, jeweils zum Anschluss an die Einzelquellen ausgeführt ist, und am elektrogeräteseitigen Ende der Mehrfachleitung eine Sammlereinrichtung vorgesehen ist, die explosionsgeschützt in einer zündgeschützten Umhüllung ausgeführt ist und jeweils eigene Anschlüsse für die galvanisch getrennten Leiterpaare sowie eine Kombinatorschaltung aufweist, wobei die Anschlüsse mit Entkoppelungsvorrichtungen in der Sammlereinrichtung versehen sind, die eine Rückwirkung auf die angeschlossenen Leiterpaare verhindern, und wobei die Kombinatorschaltung dazu ausgebildet ist, die von den galvanisch getrennten Leiterpaaren an den Anschlüssen jeweilige übertragene elektrische Leistung zusammenzuführen zu einer Gesamtleistung, wobei die Gesamtleistung an einem Ausgang der Sammlereinrichtung an das Elektrogerät ausgegeben wird.

Die Erfindung beruht auf dem Gedanken, ein Elektrogerät mit einer übergroßen Leistung dennoch eigensicher aus einer geeigneten Energiequelle zu versorgen, indem die Leistungsübertragung über mehrere galvanisch getrennte und einzeln geschirmte Leiterpaare erfolgt, wobei die über die einzelnen Leiterpaare jeweils übertragenen Einzel-Leistungen nach der Entkoppelungsvorrichtung zu einer Gesamt-Leistung zur Ausgabe an das Elektrogerät zusammengeführt werden. Hierbei bedeutet "übergroß", dass eine höhere Leistung vorliegt, als durch eine singuläre Leitung eigensicher übertragbar ist. Der Grenzwert ist die bei gegebener Spannung und Stromlage laut IEC 60079-11 spezifizierte zulässige Leistung. Dabei sind die einzelnen Leiterpaare und deren Versorgung durch eine Energiequelle, insbesondere durch eine Einzelenergiequelle, jeweils für sich in bekannter Weise eigensicher, allerdings leistungsmäßig nicht hinreichend. Durch die Auffächerung der zu übertragenden Leistung auf mehrere Leiterpaare kann eine an sich beliebig skalierbare vergrößerte Leistung eigensicher übertragen werden, und das unter Verwendung üblicher normgemäßer Leiterpaare zur eigensicheren Übertragung, beispielsweise gemäß Norm IEC 60079-25. Somit wird eine eigensichere Versorgung auch eines Elektrogeräts mit übergroßer Leistung mit wenig Aufwand ermöglicht. Das gilt insbesondere dann, wenn die einzelnen Leiterpaare an entsprechend mehrere galvanisch getrennte Einzelquellen der Energiequelle angeschlossen sind, wobei die Einzelquellen strom- und/oder spannungsbegrenzt, insbesondere leistungsbegrenzt sind, gemäß Norm IEC 60079-11. Es kann so dank der Erfindung eine Leitungsverbindung geschaffen werden, die insbesondere den Ansprüchen der Norm IEC 60079-25 genügt und dennoch ein Elektrogerät eigensicher mit übergroßer Leistung versorgt.

Unter einer Leistungsbegrenzung ist im Rahmen der Erfindung eine Begrenzung von Strom und Spannung zu verstehen. Eine solche Begrenzung ergibt sich aus normativen Vorgaben und führt zwangsläufig zu einer entsprechenden Begrenzung der Leistung. Grundsätzlich erlaubt die Erfindung jedoch das Vorliegen einer besonders großen Gesamtleistung unter Einhaltung der normativen Vorgaben. Eine gesonderte Begrenzung der Leistung würde sich daher erfindungsgemäß nicht aus sicherheitstechnischen Aspekten ergeben, sondern beispielsweise aus einer nicht sicherheitstechnisch relevanten Eigenschaft oder Funktion der Last, insbesondere des Elektrogeräts.

Ein besonderer Vorteil der Erfindung ist, dass diese höhere Leistungsübertragung verhältnismäßig wenig aufwendig ist und insbesondere keine komplexe Elektronik verlangt. Das gilt insbesondere im Vergleich zu dem in der Einleitung genannten, gemäß Norm IEC 60079-39 spezifizierten Verfahren. Die Erfindung bietet den weiteren Vorteil, dass durch den geringeren Aufwand, insbesondere durch weniger komplexe Elektronik, ein höheres Maß an Zuverlässigkeit erreicht werden kann.

Ferner kann dank der Erfindung ein besonders hohes Maß an Sicherheit erreicht werden, mit dem sogar die Schutzart "Ex ia" erfüllt werden kann, und zwar dann, wenn die Stromkreise der einzelnen Leiterpaare durch passive Bauelemente, wie etwa Widerstände, strombegrenzt werden.

Auch bei Fehlern, wie bei Beschädigung der Leitungsverbindung durch mechanische Einwirkung oder durch Versagen der Isolation, bleibt die erfindungsgemäße Energieübertragung über die mehreren galvanisch getrennten Leiterpaare eigensicher. Wird beispielsweise eine Leitung beschädigt infolge von Durchschneiden, wird zuerst ein Leiterpaar durchschnitten, dann das nächste usw. Hierbei wird von dem Schneidwerkzeug zuerst der Schirm, dann ein erster Leiter des Leiterpaares, nachfolgend dann ein zweiter Leiter des Leiterpaares und schließlich der Rest des Schirms durchtrennt, wobei schlimmstenfalls unter Annahme einer leitfähigen Schneide zuerst der Schirm mit dem ersten Leiter und nachfolgend der erste mit dem zweiten Leiter des Leiterpaares miteinander verbunden werden. Da bei einer eigensicheren Energieübertragung die einzelne Leiterpaare grundsätzlich nur eine geringe, sicherheitstechnisch unbedenkliche Leistung übertragen, entsteht so auch beim Kurzschluss nur ein sicherheitstechnisch unbedenklicher Stromfluss. Nachfolgend wiederholt sich diese Sequenz für die anderen Leiterpaare. Entscheidend ist, dass beim Schnitt die einzelnen Leiterpaare sukzessiv durchtrennt werden, so dass gleichzeitig nur jeweils der Strom einer einzelnen Quelle und nie die Summe der Ströme aus mehreren Einzelquellen unterbrochen wird. Da das Durchschneiden bei einer Einzelquelle für sich jeweils sicher ist, führt das sukzessive Durchschneiden der erfindungsgemäßen Leitungsverbindung folglich nicht zu einer Zündung. Der Fall des Durchschneidens ist entsprechend in allen denkbaren Szenarien sicher aufgrund der verwendeten Schirmung. Kritischer kann der Fall sein, wenn ein Zerreißen erfolgt. Hierbei ist werden schlimmstenfalls von n Leiterpaaren zuerst n-1 Rückleiter unterbrochen, wobei die Quellen galvanisch miteinander verbunden sind, beispielsweise durch quellenseitige gemeinsame Masse. Bei einer gleichzeitigen Unterbrechung würde der Strom aller n Leiterpaare dann durch den einzigen verbliebenen Rückleiter fließen. Wird er nachfolgend ebenfalls unterbrochen, wird der n-fache Strom getrennt, was dann zu einem Zündfunken führen könnte. Dies kann mit einer galvanischen Trennung der Einzelquellen vermieden werden, so dass insoweit Sicherheit geschaffen wird. Schließlich ist noch der Fall des Versagens der Isolation zu betrachten. Grundsätzlich kann die Isolation einer Leitungsverbindung aus verschiedenen Gründen versagen, wie etwa durch physikalische Überbeanspruchung, insbesondere infolge von Druck, Temperatur und/oder UV-Strahlung, oder durch Zersetzung durch chemische Einflüsse. Hierbei wird sich durch die Schirmung bei Fortfall der Isolation immer nur ein Kurzschluss zwischen den beiden Leitern eines Leiterpaares im Inneren des Schirmgeflechts ausbilden. Der Kurzschlussstrom bleibt damit auf das eigensichere Maß des Stroms durch ein Leiterpaar beschränkt. Somit kann eine gefährliche Addition der Ströme nicht auftreten.

Unter "eigensicher" versteht man einen solchen Stromkreis, in dem kein Funke und kein thermischer Effekt, der unter den in der Norm festgelegten Prüfbedingungen auftritt, eine Zündung einer explosionsgefährdeten Atmosphäre bestimmter normierter Zusammensetzung verursachen kann. So ist bei der Zündschutzart "eigensicher" die Leistung stets begrenzt, und zwar so, dass bei einem Kurzschluss durch den auftretenden Funken nur eine sicherheitstechnisch unbedenkliche Energiefreisetzung auftreten kann. Dies wird auch als "Zündschutz" bzw. "zündgeschützt" bezeichnet. Es handelt sich um eine Maßnahme des sekundären Explosionsschutz, worauf sich die Bezeichnung "explosionsgeschützt" bezieht. Diese Definitionen sind fachmännisch und finden sich in den einschlägigen Normen, beispielsweise in Normenfamilie IEC 60079, insbesondere in den Normenteilen -11, -14, -25)
Bei "nicht störanfällig" handelt es sich um einen Fachbegriff, der in den einschlägigen Normen zur Eigensicherheit zur Bewertung von Bauteilen und - gruppen verwendet ist. So gelten beispielsweise Zenerdioden zur Spannungsbegrenzung und andere Halbleiterbauelemente generell als störanfällig, wohingegen Schicht- oder Drahtwiderstände zur Strombegrenzung unter bestimmten normativen Voraussetzungen als nicht störanfällige Bauteile gelten.

Zweckmäßigerweise ist aber nicht nur die erfindungsgemäße Energieübertragung und insbesondere auch deren Energiequelle eigensicher ausgeführt, sondern auch das Elektrogerät selbst ist gemäß einer standardisierten Zündschutzart explosionsgeschützt, vorzugsweise gemäß Ex ia oder Ex ib eigensicher ausgeführt. Besonders bevorzugt kann für Leistungsversorgung sowie Energieverbrauch eine eigensichere Kette bis einschließlich zum Elektrogerät gebildet sein.

Mit Vorteil sind die Sammlereinrichtung und/oder die Kombinatorschaltung vergossen und/oder in einem druckfesten Gehäuse angeordnet. Durch den Verguss bzw. die Anordnung in druckfestem Gehäuse wird für diesen kritischen Bereich, in dem die über die mehreren Leiterpaare fließende Leistung zusammengeführt ist, ein besonders guter Schutz erreicht. Explosionsgefährliche Gase können wegen des Vergusses gar nicht die volle Leistung führende Schaltung erreichen, ansonsten würde das druckfeste Gehäuse im Fehlerfall als ein sicherndes Containment wirken.

Vorzugsweise weisen die Entkoppelungsvorrichtungen redundant ausgeführte Entkoppelungselemente auf. Die Redundanz sorgt für eine höhere Betriebssicherheit, da auch bei Defekt eines der Entkoppelungselemente die Entkoppelungsfunktion erhalten bleibt. Zur weiteren Vereinfachung sind die Entkoppelungselemente als vorzugsweise passive Stromventile ausgeführt, wodurch sie eine höhere Zuverlässigkeit als aktive Bauelemente aufweisen können. Hierbei sind die Stromventile in ihrer jeweiligen Entkoppelungsvorrichtung in einer nicht störanfälligen Reihenschaltung verschaltet. So kann bei Ausfall von einem oder mehreren der Stromventile ein Failsafe-Verhalten erreicht werden: bei einem ansonsten kritischen Kurzschluss des Stromventils wird bei der Reihenschaltung immer noch die gewünschte Funktionalität erreicht.

Die Kombinatorschaltung ist zweckmäßigerweise dazu ausgebildet, die von den Leiterpaaren übertragenen Ströme zusammenzufassen, und zwar vorzugsweise als Parallelschaltung. So können auf schaltungstechnisch wenig aufwendige und daher, da wenige Bauteile erfordernde, zuverlässige Weise die von den einzelnen Leiterpaaren übertragenen Einzelströme zu einem Gesamtstrom zusammengeführt werden. Es kann aber alternativ die Kombinatorschaltung auch so ausgeführt sein, vorzugsweise als Reihenschaltung, dass die Einzelspannungen des jeweiligen Leiterpaars verkettet werden zur Bildung einer höheren Gesamtspannung. So kann auf ebenso einfache wie elegante Weise eine höhere Versorgungsspannung für das Elektrogerät erreicht werden.

Mit Vorteil ist eine Strombegrenzung und/oder eine Leistungsbegrenzung für die Leiterpaare vorgesehen. In der Regel wird eine eigensichere Energiequelle ohnehin über eine Begrenzung, sei es hinsichtlich Strom, Spannung und/oder Leistung, verfügen. Es kann jedoch dennoch von Vorteil sein, insbesondere unter den Aspekten der Redundanz oder breiterer Einsetzbarkeit, beispielsweise mit anderen, nicht entsprechend begrenzten Energiequellen, dass die Energieübertragungseinheit eine eigene Strombegrenzung und/oder Leistungsbegrenzung aufweist, und zwar insbesondere in und/oder am Anfang der Leitungsverbindung, in der Sammlereinrichtung und/oder energiequellenseitig der Leitungsverbindung. Eine besonders einfache wie zweckmäßige Ausführung der Strombegrenzung kann mittels eines Widerstands realisiert sein. Für eine einfache Realisierung einer Leistungsbegrenzung, auch aus einer nicht sicherheitstechnisch relevanten Eigenschaft oder Funktion der Last, kann ein Widerstand in Kombination mit einem weiteren Stellglied verwendet werden. So kann ein Widerstand jeweils am Anfang der Leitungspaare vorgesehen sein, sei als anfänglicher Teil der Leitungspaare oder sei es vorgeschaltet, um so von Anfang an über die gesamte Erstreckung der Leitungspaare die gewünschte Begrenzung zu erhalten. Es kann aber zusätzlich oder alternativ auch vorgesehen sein, dass die Strombegrenzung und/oder die Leistungsbegrenzung, beispielsweise der Widerstand, in der Sammlereinrichtung angeordnet ist oder in die Energiequelle integriert ausgeführt ist. Die Leitungsverbindung mit ihren Leiterpaaren selbst kann damit frei bleiben von zusätzlichen Begrenzungskomponenten, was die bauliche Ausführung vereinfacht. Zweckmäßigerweise ist die Leistungsbegrenzung der Leiterpaare bemessen in einem Bereich zwischen 1,5 und 2,5 Watt.

Mit Vorteil ist das Elektrogerät als ein Feldgerät ausgeführt, insbesondere als aktiver Sensor, Telemetriegerät, Kommunikationsgerät, Stellglied und/oder Regler einer prozesstechnischen Anlage. Ferner kann das Elektrogerät einen eigenen Akkumulator aufweisen, sei es zur Erhöhung der Ausfallsicherheit oder als zusätzliche Leistungsversorgung.

Vorzugsweise ist die Sammlereinrichtung mit einem Spannungsregler versehen, der dazu ausgebildet ist, die an dem Anschluss eines Leiterpaares anliegende Spannung auf einen vorbestimmten Wert zu stellen und/oder zu begrenzen, wobei vorzugsweise der Spannungsregler eigensicher, insbesondere in Shunt-Topologie ausgeführt ist. So kann eine geregelte Ausgangsspannung der Sammlereinrichtung erreicht werden. Das ist nicht nur von Vorteil zur Versorgung von Elektrogeräten, die eine stabilisierte Versorgungsspannung erwarten, sondern kann auch genutzt werden beispielsweise zum Laden von Akkumulatoren für das Elektrogerät. Zweckmäßigerweise ist der Spannungsregler selbst ebenfalls eigensicher ausgeführt. Insbesondere ist bei einer Ausführung der Sammlereinrichtung unter Verguss auch der Spannungsregler mit vergossen. Die Ausführung in Shunt-Topologie ermöglicht, anders als bei einem üblichen Längsregler, eine eigensichere Realisierung nach "Ex ia". Ferner kann mittels des Shunt-Reglers eine Begrenzung der Spannung des Akkumulators erfolgen unter Nutzung des Leitung- und Innenwiderstands der Energiequellen. Mit Vorteil ist hierbei ein Stellglied des Spannungsreglers leitungsseitig vor der Entkopplungseinrichtung angeordnet. Dies bietet den Vorteil, dass es nur die Leistung aus der eigenen Quelle "sieht", nicht aber die aus einem gegebenenfalls in dem Elektrogerät angeordneten Akkumulator.

Von Vorteil ist insbesondere, wenn eine Begrenzung der maximalen Batteriespannung des Akkumulators mittels des Shunt-Reglers erreicht werden soll. Dazu ist zweckmäßigerweise eine Begrenzerschaltung vorgesehen, die dazu ausgebildet ist bei Erreichen einer vordefinierten Schwelle, wie beispielsweise der Maximalspannung des Akkumulators, das Laden des Akkumulators zu beenden oder zumindest temporär zu unterbrechen.

Weiter kann mit Vorteil zum Schutz des Akkumulators eine Freigabeschaltung in dem Elektrogerät vorgesehen sein, die so ausgebildet ist, einen Ladevorgang des Akkumulators nur dann durchzuführen, wenn dieser eine gewisse vorbestimmte Mindestspannung aufweist.

Zweckmäßigerweise ist ferner vorgesehen, dass den Anschlüssen jeweils ein eigener Spannungsregler zugeordnet ist. Dies ermöglicht eine Aufteilung der Verlustleistung auf die einzelnen Spannungsregler, mithin also bei n Spannungsreglern an n Leiterpaaren in n kleine Portionen. Außerdem wird eine gegenseitige Beeinflussung der verschiedenen Anschlüsse vermieden. Weiter weist die Anordnung der Spannungsregler in der Sammlereinrichtung den Vorteil auf, dass dessen Verlustleistung dort anfällt und nicht in dem möglicherweise thermisch empfindlicheren Elektrogerät.

Mit Vorteil sind Masseleitungen der Leiterpaare in der Leiterverbindung isoliert und erst in der Sammlereinrichtung zusammengeführt, vorzugsweise innerhalb der zündgeschützten Umhüllung, oder durch die Sammlereinrichtung durchgeführt, um erst in dem Elektrogerät zusammengeführt zu werden. Zusammengeführt werden sie vorzugsweise auf ein nicht störanfälliges Massepotential ("GND"). Die Zusammenschaltung der einzelnen Leiterpaare findet hierbei vollständig erst innerhalb der Kombinatorschaltung der Sammlereinrichtung oder sogar erst in dem zu versorgenden Elektrogerät statt.

Zweckmäßigerweise sind die Leiterpaare in einer gemeinsamen Ummantelung angeordnet. Dies vereinfacht die Führung und die geschützte Anordnung der Leitungsverbindung. Weiter ist die Leitungsverbindung vorzugsweise mit einer Schirmung versehen, wobei die Schirmung vorzugsweise einseitig, insbesondere quellenseitig, geerdet ist. Durch die einseitig geerdete Schirmung können störende elektromagnetische Beeinflussungen abgeschwächt werden und eine sicherheitstechnisch bedenkliche Potentialverschleppung über die Schirmung ist ausgeschlossen.

Ferner kann optional ein Potentialwächter an der Leiterverbindung vorgesehen sein. Er ist zweckmäßigerweise dazu ausgebildet ist, die Spannungen der einzelnen Versorgungskreise zu überwachen. Weiter kann optional ein Isolationswächter vorgesehen sein, der dazu ausgebildet ist, einen Kurzschluss in und/oder zwischen Leiterpaaren zu detektieren und bei erkanntem Kurzschluss einen Stromfluss durch diese Leiterpaare zu begrenzen. Mit Potentialwächter und/oder Isolationswächter kann eine wirksame Überwachung der Betriebssicherheit der Energieübertragungseinheit erreicht werden.

Die Erfindung erstreckt sich ferner auf ein zur Versorgung eines Elektrogeräts im explosionsgeschützten Bereich geeignetes eigensicheres Energieversorgungssystem umfassend eine Energiequelle und eine Energieübertragungseinheit, wie vorstehend beschrieben. Für weitere Einzelheiten zur Energieübertragungseinheit wird auf vorstehende Beschreibung verwiesen.

In Bezug auf die Energiequelle ist anzumerken, dass sie mehrere Einzelquellen umfasst, wobei je eine Einzelquelle einem der Leiterpaare zugeordnet und galvanisch von den anderen Einzelquellen getrennt ist. Die Energiequelle und/oder deren Einzelquellen sind vorzugsweise strom- und/oder spannungsbegrenzt, und weisen zweckmäßigerweise dazu einen Ausgangswiderstand auf. Es kann so auf zweckmäßige Weise die für die Eigensicherheit gewünschte Begrenzung von Strom und Spannung auf sicherheitstechnisch unbedenkliche Werte und eine entsprechende Begrenzung der übertragbaren Leistung je einzelnem Leiterpaar erreicht werden. Für Anwendungen die nur einen Schutz nach "Ex ib" erfordern ist anstatt einer Serienwiderstandsbegrenzung auch eine redundante elektronische Strombegrenzung aus aktiven Komponenten, beispielsweise durch eine Transistorschaltung, möglich.

In Bezug auf das Elektrogerät ist anzumerken, dass optional die Sammlereinrichtung in das Elektrogerät oder umgekehrt das Elektrogerät in die Sammlereinrichtung integriert sein kann, wobei vorzugsweise das Elektrogerät ein Feldgerät ist, insbesondere ein aktiver Sensor, Stellglied oder ein Regler einer prozesstechnischen Anlage. Insbesondere bei einem Elektrogerät mit hohem Leistungsbedarf bietet es sich an, die Zusammenführung mittels der Sammlereinrichtung erst dort vorzunehmen, um unnötig lange Übertragungsstrecken mit bereits kombinierten Strömen und/oder kombinierter Spannung zu vermeiden.

Vorzugsweise weist das Elektrogerät einen Akkumulator auf, vorzugsweise mit einem integrierten Laderegler für den Akkumulator, wobei weiter vorzugsweise der Laderegler spannungsgeführt ausgebildet ist. Es kann so die Erfindung genutzt werden zum Laden eines Akkumulators des Elektrogeräts, oder aber auch zur Klemmung der Akkumulatorspannung. Bevorzugt ist hierbei weiterhin eine Begrenzerschaltung vorgesehen, die dazu ausgebildet ist, ein Laden des Akkumulators bei Erreichen eines vordefinierten Schwellenwerts, insbesondere einer Maximalspannung, zu beenden.

Die Erfindung wird nachfolgend anhand vorteilhafter Ausführungsformen beispielhaft beschrieben. Es zeigen:
- Fig. 1: eine schematische Ansicht eines eigensicheren Energieversorgungssystems;
- Fig. 2: ein elektrisches Ersatzschaltbild zu Fig. 1;
- Fig. 3: eine erste Ausführungsform mit einer Zusammenschaltung von Strömen;
- Fig. 4: eine zweite Ausführungsform mit einer Zusammenschaltung von Spannungen;
- Fig. 5: ein Shunt-Regler für die Energieübertragungseinheit;
- Fig. 6: eine Energiequelle mit vorteilhaft ausgeführten Transformatoren;
- Fig. 7: eine Energieübertragungseinheit gemäß einer Ausführungsvariante zur Versorgung verschiedener Elektrogeräte.

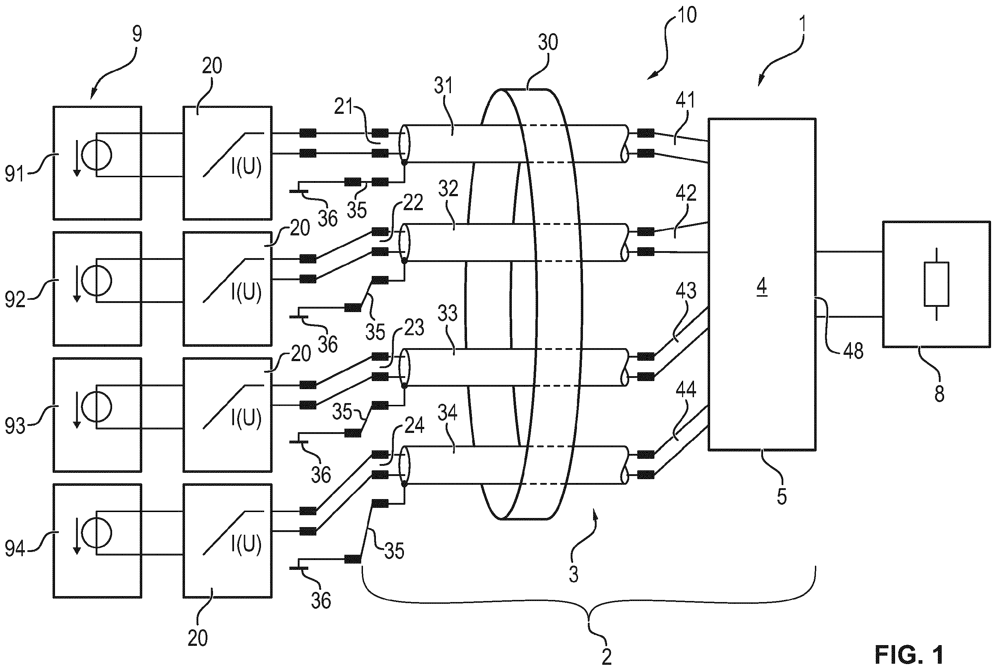

Eine schematische Darstellung eines Beispiels für ein eigensicheres Energieübertragungssystem 10 gemäß der vorliegenden Erfindung ist in Figur 1 dargestellt. Es umfasst als Hauptkomponenten ein eigensicheres Energieübertragungssubsystem 1 zur Versorgung eines Elektrogeräts 8 als Last, wobei die erforderliche Leistung von einer Energiequelle 9 in das Energieübertragungssubsystem 1 gespeist wird.

Das Energieübertragungssubsystem 1 umfasst eine Leitungsverbindung 2 mit einer Mehrfachleitung 3, welche mehrere Leiterpaare 31 - 34 aufweist. Beispielhaft sind in Figur 1 vier Leiterpaare dargestellt, es können aber auch 2, 3 oder 5 und mehr Leiterpaare sein. Sie sind jeweils mit einer eigenen Schirmung 35 versehen und angeordnet in einer gemeinsamen Umhüllung 30. Die Schirmung 35 ist in dieser Ausführungsform einseitig, und zwar quellenseitig, also auf der Seite der Energiequelle 9, auf Erdpotential 36 gelegt.

Die Leitungsverbindung 2 weist mehrere Eingangsanschlüsse 21, 22, 23, 24 auf, wobei deren Anzahl identisch ist mit der Anzahl der Leiterpaare 31, 32, 33, 34. An die Eingangsanschlüsse 21, 22, 23, 24 ist eine Energiequelle 9 mit mehreren galvanisch getrennten Einzelquellen 91, 92, 93, 94 angeschlossen, wobei jedem der Anschlüsse 21 - 24 eine der Energiequellen 91 - 94 zugeordnet ist. Am Anfang von jedem der Leiterpaare 31 - 34 ist eine Begrenzungseinrichtung 20 dargestellt, welche als Strom- oder Spannungsbegrenzung ausgeführt sein kann (im einfachsten Fall als passiver Widerstand). Sie beschränkt den Strom- und/oder die Spannung in jedem der Leiterpaare 31 - 34 auf eigensichere Maße. Wie groß diese jeweils sind, ergibt sich aus den einschlägigen Normen und wird von dem Fachmann entsprechend bestimmt. Typischerweise ergeben sich daraus Einzelleistungen für jedes der Leiterpaare 31 - 34 von unter 3 W, meist im Bereich von 1,5 bis 2,5 W.

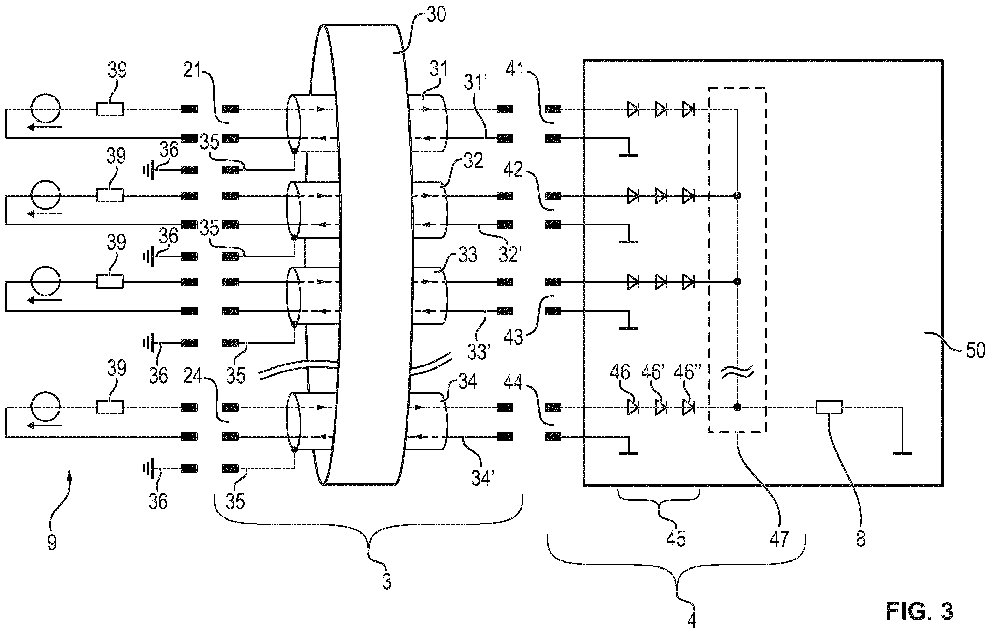

Das andere Ende der Mehrfachleitung 3 ist an eine Sammlereinrichtung 4 angeschlossen. Dazu weist die Sammlereinrichtung 4 mehrere Anschlüsse 41, 42, 43, 44 auf, an welche die Enden der Leiterpaare 31, 32, 33, 34 angeschlossen sind. Die Sammlereinrichtung 4 führt die über die einzelne Leiterpaare 31 - 34 übertragenen einzelnen Leistungen zu einer Gesamtleistung zusammen. Wegen der dabei auftretenden höheren Ströme/Spannungen ist die Sammlereinrichtung 4 zum Schutz in einem druckfesten Gehäuse 5 angeordnet. Alternativ oder ergänzend ist die Sammlereinrichtung 5 unter Verguss 50 angeordnet (siehe Figuren 3 bis 5). Die so gebildete Gesamtleistung wird an einem Ausgang 48 der Sammlereinrichtung 4 bereitgestellt, an den das zu versorgende Elektrogerät 8 als Last angeschlossen ist.

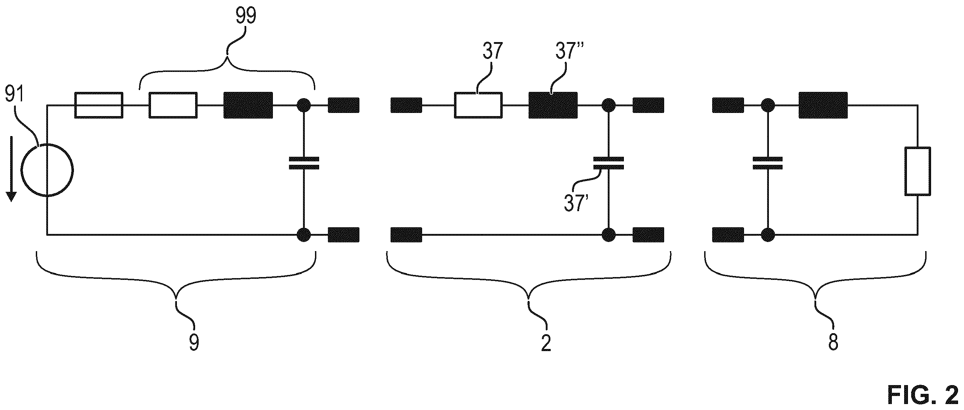

Ein elektrisches Ersatzschaltbild ist in Figur 2 dargestellt. Im linken Bildbereich erkennt man die Energiequelle 9, deren Ausgangswiderstand durch eine Impedanz 99 symbolisiert ist. Diese Impedanz 99 begrenzt den maximal der Quelle 91 entnehmbaren Strom und damit indirekt auch die entnehmbare Leistung. Daran schließt sich an die Leitungsverbindung 2 mit einer in dem Leiterpaar angeordneten Leitungswiderstand 37, sowie der Leitungskapazität 37' und Leitungsinduktivität 37". In Figur 2 nicht dargestellt ist die Sammlereinrichtung 4, da sie insoweit elektrisch gesehen transparent ist. Den Abschluss bildet schließlich das Elektrogerät 8 als Last.

Eine erste Ausführungsform ist in Figur 3 dargestellt. Sie ist so ausgebildet, dass eine Zusammenschaltung der in den einzelnen Leiterpaaren 31 - 34 übertragenen Ströme erfolgt. Dazu ist die Sammlereinrichtung 4 mit einer Kombinatorschaltung 47 versehen. Mit dieser sind die Anschlüsse 41 - 44 über eine Entkoppelungsvorrichtung 45 verbunden. Jede der Entkoppelungsvorrichtungen 45 enthält aus Redundanzgründen mehrere Entkoppelungselemente 46, 46', 46", die in dem dargestellten Ausführungsbeispiel als drei in Reihe geschaltete Dioden ausgeführt sind. Sie fungieren als Stromventile und leiten den von dem jeweiligen Leiterpaar 31 - 34 übertragenen Strom zu einer Kombinatorschaltung 47. Diese ist in der darstellten Ausführungsform so ausgeführt, dass sie die einzelnen Ströme parallel schaltet und zu einem Gesamtstrom aufaddiert. Der so gebildete Gesamtstrom kann an die durch das Elektrogerät 8 gebildete Last ausgegeben werden, welche in diesem Ausführungsbeispiel integriert mit der Sammlereinrichtung 4 unter gemeinsamen Verguss 50 verbaut ist.

Bei dieser Ausführungsform ist die Strombegrenzung 20 anders als in Figur 1 in vereinfachter Form ausgeführt, nämlich als ein den Einzelquellen 91 - 94 nachgeschalteter Begrenzungswiderstand 39 am Anfang der Leitungsverbindung 2.

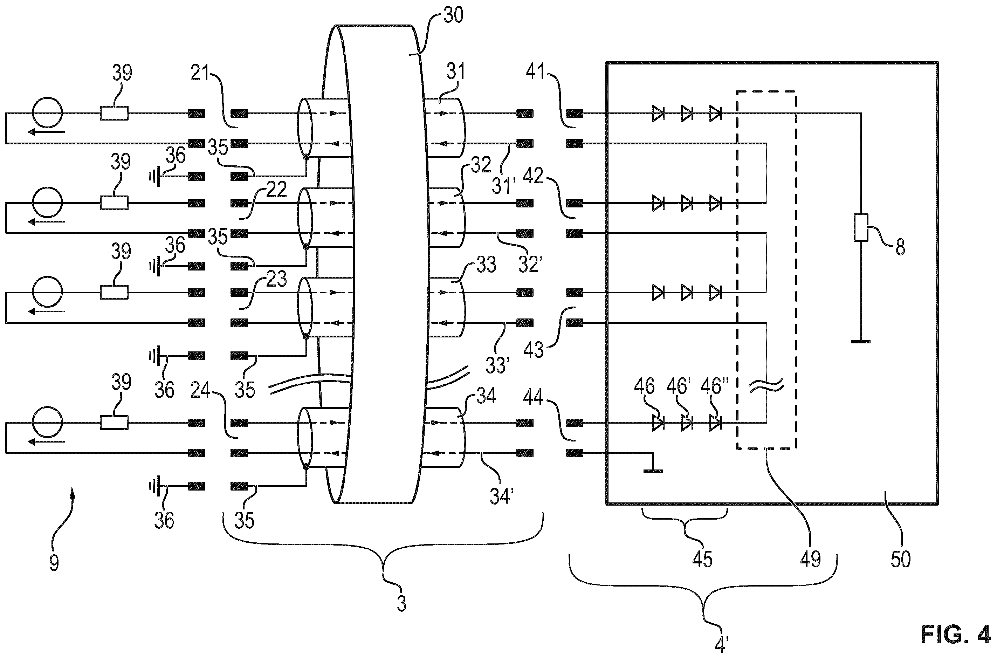

Eine zweite alternative Ausführungsform ist in Figur 4 dargestellt. Sie stimmt im Wesentlichen mit der in Figur 3 dargestellten Ausführungsform überein, wobei gleiche oder gleichartige Elemente dieselben Bezugszeichen tragen. Sie unterscheidet sich im Wesentlichen dadurch, dass eine anders ausgeführte Kombinatorschaltung 49 eingesetzt ist. Sie ist dazu ausgebildet, die einzelnen Leiterpaare 31 - 34 in Reihe zu verbinden und so eine Aufaddierung der Spannungen durchzuführen. Die so gebildete Gesamtspannung wird wiederum an das Elektrogerät 8 als Last ausgegeben.

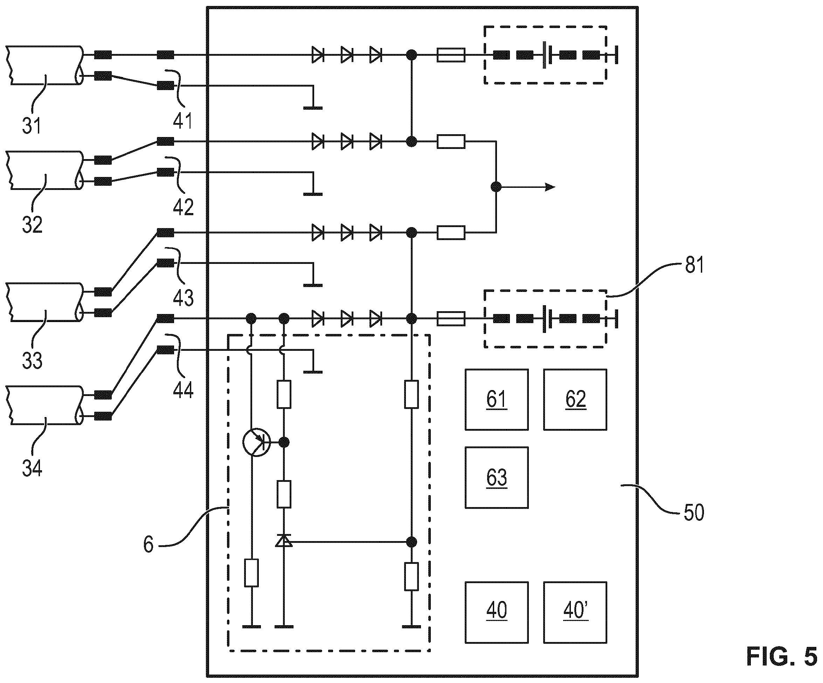

Bei der in Figur 5 dargestellten Ausführungsvariante ist zusätzlich ein Shunt-Regler 6 für die Energieübertragungseinheit vorgesehen. Der Shunt-Regler 6 ist beispielhaft an den Anschlüssen 44 für das Leiterpaar 34 dargestellt - zweckmäßigerweise ist er auch für die anderen Anschlüssen vorgesehen. Der Shunt-Regler 6 ist ebenfalls im Verguss 50 angeordnet. Er ist dazu ausgebildet, die Spannung in dem Leiterpaar 34 zu überwachen und sorgt so für eine kontrollierte Spannungsabgabe an das Elektrogerät 8 als Last. In einem nicht dargestellten Ausführungsbeispiel wird anstelle des Vergusses eine andere normgemäße Zündschutzart, wie etwa Kapselung, verwendet, wie beispielsweise druckfeste Kapselung, Kapselung gemäß der genormten Zündschutzart "erhöhte Sicherheit", Sandkapselung, Ölkapselung, Überdruckkapselung.

Der Shunt-Regler 6 eignet sich neben der Versorgung des Elektrogeräts 8 als solches auch zum Laden eines integrierten Akkumulators 81 des Elektrogeräts 8. Vorzugsweise wirkt er dafür zusammen mit einem Laderegler 61, der ebenfalls integriert im Verguss 50 angeordnet ist, sowie einer Begrenzerschaltung 62, die das Laden des Akkumulators 81 bei Erreichen einer vordefinierten Maximalspannung beendet. Weiter ist optional eine Freigabeschaltung 63 vorgesehen. Sie ist dazu ausgebildet, zum Schutz des Akkumulators das Laden erst dann freizugeben, wenn dieser eine bestimmte Mindestspannung aufweist.

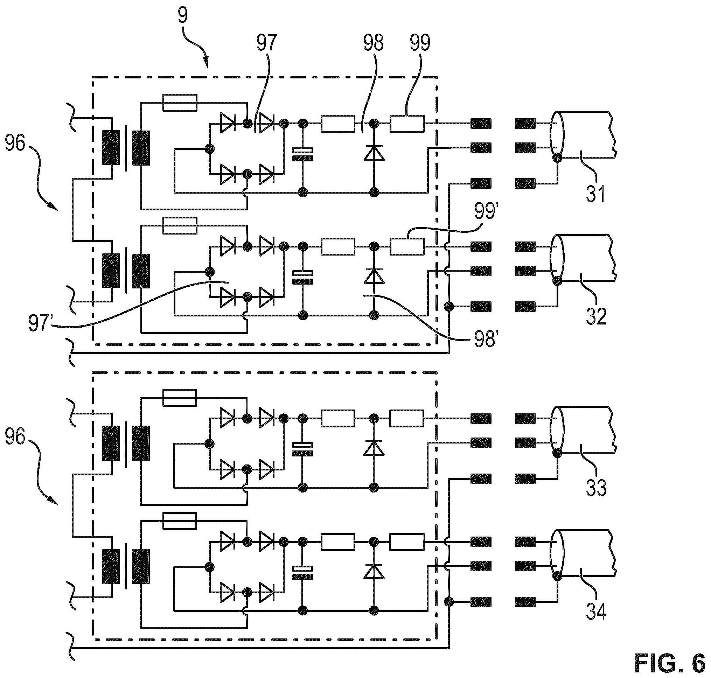

Eine besonders sichere Ausführung der Energiequelle 9 mit Transformatoren 96 ist in Figur 6 dargestellt. Es sind insgesamt zwei Transformatoren 96 mit jeweils zwei Zweigen dargestellt, von denen jeder Zweig an eines der Leiterpaare 31 - 34 angeschlossen ist. Die Transformatoren 96 weisen jeweils zwei gesonderte, galvanisch getrennte Sekundärwicklungen auf, an die jeweils ein Gleichrichter 97, 97'zur Umformung in Gleichspannung angeschlossen ist. Deren Höhe wird über einen Spannungsregler 98, 98' geregelt, dem ein Begrenzungswiderstand 99, 99' zur Strombegrenzung nachgeschaltet ist.

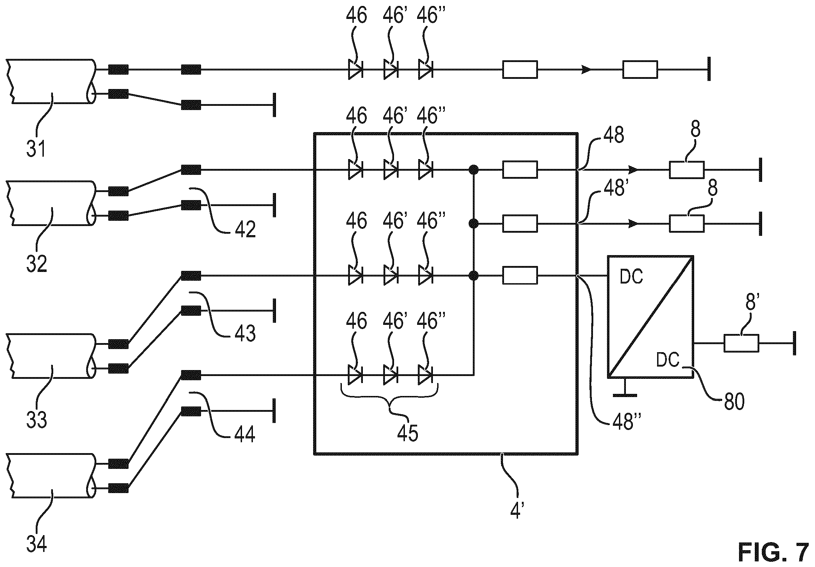

Eine weitere Variante für die Sammlereinrichtung 4 ist in Figur 7 dargestellt. Bei diesem Ausführungsbeispiel erfasst die Sammlereinrichtung 4' nicht sämtliche Leiterpaare, sondern nur einen Teil davon, nämlich die Leiterpaare 32 - 34. Der durch Parallelisierung zusammengeführte Gesamtstrom wird an mehreren Ausgängen 48, 48', 48" ausgegeben, die unterschiedlich geschaltet sein können. Beispielsweise ist an dem Ausgang 48 und 48' jeweils eine ohmsche Last angeordnet, während am Ausgang 48" ein DC/DC Wandler 80 zur Versorgung eines auf anderem Spannungsniveau arbeitenden Elektrogeräts 8' vorgesehen ist.

## Patentansprüche

1. Eigensicheres Energieübertragungssubsystem (1), geeignet für einen explosionsgeschützten Bereich zur Versorgung eines Elektrogeräts (8), das eine Leitungsverbindung (2) umfasst und das zur eigensicheren Übertragung von elektrischer Leistung über die Leitungsverbindung (2) von einer Energiequelle (9) mit mehreren galvanisch getrennten Einzelquellen (91, 92, 93, 94) zu dem Elektrogerät (8) ausgebildet ist, **dadurch gekennzeichnet, dass**
die Leitungsverbindung (2) als Mehrfachleitung mit mehreren galvanisch getrennten und einzeln geschirmten Leiterpaaren (31, 32, 33, 34) jeweils zum Anschluss an die Einzelquellen ausgebildet ist, und
am elektrogeräteseitigen Ende der Mehrfachleitung (3) eine Sammlereinrichtung (4) vorgesehen ist, die explosionsgeschützt in einer zündgeschützten Umhüllung (5) ausgeführt ist und jeweils eigene Anschlüsse (41, 42, 43, 44) für die galvanisch getrennten Leiterpaare (31, 32, 33, 34) sowie eine Kombinatorschaltung (47, 49) aufweist,
wobei die Anschlüsse (41, 42, 43, 44) mit Entkoppelungsvorrichtungen (45) in der Sammlereinrichtung versehen sind, die eine Rückwirkung auf die angeschlossenen Leiterpaare (31, 32, 33, 34) verhindern, und
die Kombinatorschaltung (47, 49) dazu ausgebildet ist, die von den galvanisch getrennten Leiterpaaren (31, 32, 33, 34) an den Anschlüssen (41, 42, 43, 44) jeweilige übertragene elektrische Leistung zusammenzuführen zu einer Gesamtleistung, wobei die Gesamtleistung an einem Ausgang (48) der Sammlereinrichtung (4) an das Elektrogerät (8) ausgegeben wird.

2. Eigensicheres Energieübertragungssubsystem (1) nach Anspruch 1,
wobei das Elektrogerät (8) gemäß einer standardisierten Zündschutzart explosionsgeschützt ist, insbesondere eigensicher nach Ex ia oder Ex ib ist.

3. Eigensicheres Energieübertragungssubsystem (1) nach einem der vorangehenden Ansprüche,
wobei die Sammlereinrichtung (4) und/oder die Kombinatorschaltung (47, 49) vergossen und/oder in einem druckfesten Gehäuse (5) angeordnet sind.

4. Eigensicheres Energieübertragungssubsystem (1) nach einem der vorangehenden Ansprüche,
wobei die Entkoppelungsvorrichtungen (45) redundant ausgeführte Entkoppelungselemente (46, 46', 46") aufweisen, die insbesondere als vorzugsweise passive Stromventile ausgeführt sind, wobei vorzugsweise die Stromventile in ihrer jeweiligen Entkoppelungsvorrichtung (45) in einer nicht störanfälligen Reihenschaltung verschaltet sind.

5. Eigensicheres Energieübertragungssubsystem (1) nach einem der Ansprüche 1 bis 4,
wobei die Kombinatorschaltung (47, 49) dazu ausgebildet ist, die von den Leiterpaaren (31, 32, 33, 34) übertragenen Ströme zusammenzufassen, vorzugsweise als Parallelschaltung, oder
wobei die Kombinatorschaltung (47, 49) dazu ausgebildet ist, die von den Leiterpaaren (31, 32, 33, 34) übertragenen Spannungen zusammenzufassen, vorzugsweise als Reihenschaltung.

6. Eigensicheres Energieübertragungssubsystem (1) nach einem der vorangehenden Ansprüche,
wobei eine Strombegrenzung für die Leiterpaare (31, 32, 33, 34) vorgesehen ist, vorzugsweise mittels eines Widerstands, insbesondere in und/oder am Anfang der Leitungsverbindung (2), in der Sammlereinrichtung (4) und/oder energiequellenseitig der Leitungsverbindung (2).

7. Eigensicheres Energieübertragungssubsystem (1) nach einem der vorangehenden Ansprüche,
wobei die Sammlereinrichtung (4) mit einem Spannungsregler (98, 98') versehen ist, der dazu ausgebildet ist, die an dem Anschluss eines Leiterpaares (31, 32, 33, 34) anliegende Spannung auf einen vorbestimmten Wert zu stellen und/oder zu begrenzen,
wobei vorzugsweise der Spannungsregler (98, 98') eigensicher, insbesondere in Shunt-Topologie ausgeführt ist.

8. Eigensicheres Energieübertragungssubsystem (1) nach Anspruch 7,
wobei den Anschlüssen jeweils ein eigener Spannungsregler (98, 98') zugeordnet ist.

9. Eigensicheres Energieübertragungssubsystem (1) nach einem der vorangehenden Ansprüche,
wobei Masseleitungen der Leiterpaare (31, 32, 33, 34) in der Leiterverbindung isoliert sind, und erst in der Sammlereinrichtung (4), vorzugsweise innerhalb einer zündgeschützten Umhüllung, zusammengeführt sind oder durch die Sammlereinrichtung (4) durchgeführt sind, um erst in dem Elektrogerät (8) zusammengeführt zu werden.

10. Eigensicheres Energieübertragungssubsystem (1) nach einem der vorangehenden Ansprüche,
wobei die Leiterpaare (31, 32, 33, 34) in einer gemeinsamen Ummantelung angeordnet sind, und/oder
wobei die Leitungsverbindung (2) mit einer Schirmung (35) versehen ist, wobei die Schirmung (35) vorzugsweise einseitig, insbesondere quellenseitig, geerdet ist.

11. Eigensicheres Energieversorgungssystem (10), umfassend eine Energiequelle (9) und ein Energieübertragungssubsystem (1), geeignet zur Versorgung eines Elektrogeräts (8) im explosionsgeschützten Bereich,
wobei das Energieübertragungssubsystem (1) nach einem der Ansprüche 1 bis 10 eigensicher ausgeführt ist.

12. Eigensicheres Energieversorgungssystem (10) nach Anspruch 11,
wobei die Energiequelle (9) mehrere galvanisch getrennte Einzelquellen (91, 92, 93, 94) aufweist,
wobei je eine Einzelquelle (91, 92, 93, 94) einem der Leiterpaare (31, 32, 33, 34) zugeordnet ist,
wobei die Energiequelle (9) und/oder die Einzelquellen (91, 92, 93, 94) einen Ausgangswiderstand (99) aufweisen, insbesondere strom- und/oder spannungsbegrenzt sind.

13. Eigensicheres Energieversorgungssystem (10) nach einem der Ansprüche 11 bis 12,
wobei die Sammlereinrichtung (4) in das Elektrogerät (8) integriert ausgeführt ist,
wobei vorzugsweise das Elektrogerät (8) ein Feldgerät ist, insbesondere ein aktiver Sensor, ein Stellglied oder ein Regler einer prozesstechnischen Anlage.

14. Eigensicheres Energieversorgungssystem (10) nach einem der Ansprüche 11 bis 13,
wobei das Elektrogerät (8) einen Akkumulator (81) aufweist, vorzugsweise mit einem integrierten Laderegler (61) für den Akkumulator,
wobei weiter vorzugsweise der Laderegler spannungsgeführt ausgebildet ist.

15. Eigensicheres Energieversorgungssystem (10) nach Anspruch 14,
wobei eine Begrenzerschaltung (62) vorgesehen ist, die dazu ausgebildet ist, ein Laden des Akkumulators (81) bei Erreichen eines vordefinierten Schwellenwerts, insbesondere einer Maximalspannung, zu beenden.

## Claims

1. Intrinsically safe energy transmission subsystem (1) which is suitable for an explosion-proof region for supplying an electrical appliance (8), comprises a line connection (2) and is designed for intrinsically safe transmission of electrical power, via the line connection (2), from an energy source (9) having a plurality of galvanically isolated individual sources (91, 92, 93, 94) to the electrical appliance (8), **characterized in that**
the line connection (2) is designed as a multiple line having a plurality of galvanically isolated and individually shielded conductor pairs (31,32, 33, 34) each for connection to the individual sources, and
at the electrical appliance end of the multiple line (3), a collector apparatus (4) is provided which is designed to be explosion-proof in an ignition-protected enclosure (5) and has separate terminals (41,42, 43, 44) for the galvanically isolated conductor pairs (31, 32, 33, 34) and a combiner circuit (47, 49),
the terminals (41,42, 43, 44) being provided with decoupling devices (45) in the collector apparatus, which prevent a feedback effect on the connected conductor pairs (31,32, 33, 34), and
the combiner circuit (47, 49) being designed to combine the electrical power transmitted by the galvanically isolated conductor pairs (31,32, 33, 34) at the terminals (41,42, 43, 44) into a total power, the total power being output at an output (48) of the collector apparatus (4) to the electrical appliance (8).

2. Intrinsically safe energy transmission subsystem (1) according to claim 1,
wherein the electrical appliance (8) is explosion-proof according to a standardized type of ignition protection, in particular is intrinsically safe according to Ex ia or Ex ib.

3. Intrinsically safe energy transmission subsystem (1) according to either of the preceding claims,
wherein the collector apparatus (4) and/or the combiner circuit (47, 49) are potted and/or arranged in a pressure-resistant housing (5).

4. Intrinsically safe energy transmission subsystem (1) according to any of the preceding claims,
wherein the decoupling devices (45) have redundantly designed decoupling elements (46, 46', 46") which in particular are designed as preferably passive current valves, wherein the current valves are preferably connected in their relevant decoupling device (45) in a series circuit which is not prone to faults.

5. Intrinsically safe energy transmission subsystem (1) according to any of claims 1 to 4,
wherein the combiner circuit (47, 49) is designed to combine the currents transmitted by the conductor pairs (31, 32, 33, 34), preferably as a parallel circuit, or
wherein the combiner circuit (47, 49) is designed to combine the voltages transmitted by the conductor pairs (31, 32, 33, 34), preferably as a series circuit.

6. Intrinsically safe energy transmission subsystem (1) according to any of the preceding claims,
wherein current limiting for the conductor pairs (31, 32, 33, 34) is provided, preferably by means of a resistor, in particular in and/or at the beginning of the line connection (2), in the collector apparatus (4) and/or on the energy source side of the line connection (2).

7. Intrinsically safe energy transmission subsystem (1) according to any of the preceding claims,
wherein the collector apparatus (4) is provided with a voltage regulator (98, 98') which is designed to set and/or limit the voltage applied to the terminal of a conductor pair (31, 32, 33, 34) to a predetermined value,
wherein the voltage regulator (98, 98') is preferably intrinsically safe, in particular designed in a shunt topology.

8. Intrinsically safe energy transmission subsystem (1) according to claim 7, wherein each terminal has its own voltage regulator (98, 98') associated with it.

9. Intrinsically safe energy transmission subsystem (1) according to any of the preceding claims,
wherein ground lines of the conductor pairs (31, 32, 33, 34) are insulated in the conductor connection and are only combined in the collector apparatus (4), preferably within an ignition-protected enclosure, or are passed through the collector apparatus (4) to be combined only in the electrical appliance (8).

10. Intrinsically safe energy transmission subsystem (1) according to any of the preceding claims,
wherein the conductor pairs (31, 32, 33, 34) are arranged in a common sheath, and/or
wherein the line connection (2) is provided with a shield (35), wherein the shield (35) is preferably grounded on one side, in particular on the source side.

11. Intrinsically safe energy supply system (10), comprising an energy source (9) and an energy transmission subsystem (1) which is suitable for supplying an electrical appliance (8) in an explosion-proof region,
wherein the energy transmission subsystem (1) according to any of claims 1 to 10 is intrinsically safe.

12. Intrinsically safe energy supply system (10) according to claim 11,
wherein the energy source (9) has a plurality of galvanically isolated individual sources (91, 92, 93, 94),
wherein each individual source (91, 92, 93, 94) is associated with one of the conductor pairs (31, 32, 33, 34),
wherein the energy source (9) and/or the individual sources (91, 92, 93, 94) have an output resistor (99), in particular are current and/or voltage limited.

13. Intrinsically safe energy supply system (10) according to any of claims 11 to 12,
wherein the collector apparatus (4) is integrated into the electrical appliance (8),
wherein the electrical appliance (8) is preferably a field device, in particular an active sensor, an actuator or a controller of a process engineering plant.

14. Intrinsically safe energy supply system (10) according to any of claims 11 to 13,
wherein the electrical appliance (8) has a battery (81), preferably having an integrated charge regulator (61) for the battery,
wherein the charge regulator is further preferably designed to be voltage driven.

15. Intrinsically safe energy supply system (10) according to claim 14,
wherein a limiter circuit (62) is provided which is designed to terminate charging of the accumulator (81) when a predefined threshold, in particular a maximum voltage, is reached.

## Revendications

1. Sous-système de transmission d'énergie (1) à sécurité intrinsèque, approprié pour une zone protégée contre les explosions pour l'alimentation d'un appareil électrique (8), lequel sous-système comprend une connexion de ligne (2) et est configuré pour la transmission à sécurité intrinsèque de puissance électrique par l'intermédiaire de la connexion de ligne (2) depuis une source d'énergie (9) comportant plusieurs sources individuelles (91, 92, 93, 94) séparées galvaniquement jusqu'à l'appareil électrique (8), **caractérisé en ce que**
la connexion de ligne (2) est conçue comme une ligne multiple comportant plusieurs paires de conducteurs (31, 32, 33, 34) séparées galvaniquement et blindées individuellement, respectivement pour le raccordement aux sources individuelles, et
à l'extrémité côté appareil électrique de la ligne multiple (3) est prévu un moyen collecteur (4) qui est réalisé de manière à être protégé contre les explosions dans une gaine (5) protégée contre les inflammations et qui présente respectivement des bornes (41, 42, 43, 44) propres pour les paires de conducteurs (31, 32, 33, 34) séparées galvaniquement ainsi qu'un circuit combinateur (47, 49),
dans lequel les bornes (41, 42, 43, 44) sont pourvues de dispositifs de découplage (45) dans le moyen collecteur qui empêchent une rétroaction sur les paires de conducteurs (31, 32, 33, 34) raccordées, et
le circuit combinateur (47, 49) est configuré pour combiner la puissance électrique transmise respectivement par les paires de conducteurs (31, 32, 33, 34) séparées galvaniquement aux bornes (41, 42, 43, 44) en une puissance totale, dans lequel la puissance totale est fournie à l'appareil électrique (8) à une sortie (48) du moyen collecteur (4).

2. Sous-système de transmission d'énergie (1) à sécurité intrinsèque selon la revendication 1, dans lequel l'appareil électrique (8) est protégé contre les explosions conformément à un mode de protection contre les inflammations standardisé, en particulier est à sécurité intrinsèque selon la catégorie Ex ia ou Ex ib.

3. Sous-système de transmission d'énergie (1) à sécurité intrinsèque selon l'une des revendications précédentes,
dans lequel le moyen collecteur (4) et/ou le circuit combinateur (47, 49) sont encapsulés et/ou disposés dans un boîtier (5) résistant à la pression.

4. Sous-système de transmission d'énergie (1) à sécurité intrinsèque selon l'une des revendications précédentes,
dans lequel les dispositifs de découplage (45) présentent des éléments de découplage (46, 46', 46") réalisés de manière redondante, lesquels sont réalisés en particulier sous forme de vannes de courant de préférence passives, dans lequel, de préférence, les vannes de courant sont montées dans leur dispositif de découplage (45) respectif dans un montage en série non sujet aux perturbations.

5. Sous-système de transmission d'énergie (1) à sécurité intrinsèque selon l'une des revendications 1 à 4,
dans lequel le circuit combinateur (47, 49) est configuré pour combiner les courants transmis par les paires de conducteurs (31, 32, 33, 34), de préférence sous forme de montage en parallèle, ou
dans lequel le circuit combinateur (47, 49) est configuré pour combiner les tensions transmises par les paires de conducteurs (31, 32, 33, 34), de préférence sous forme de montage en série.

6. Sous-système de transmission d'énergie (1) à sécurité intrinsèque selon l'une des revendications précédentes,
dans lequel une limitation de courant est prévue pour les paires de conducteurs (31, 32, 33, 34), de préférence au moyen d'une résistance, en particulier dans la connexion de ligne (2) et/ou au début de celle-ci, dans le moyen collecteur (4) et/ou du côté de la source d'énergie de la connexion de ligne (2).

7. Sous-système de transmission d'énergie (1) à sécurité intrinsèque selon l'une des revendications précédentes,
dans lequel le moyen collecteur (4) est pourvu d'un régulateur de tension (98, 98') qui est configuré pour réguler et/ou limiter la tension appliquée à la borne d'une paire de conducteurs (31, 32, 33, 34) à une valeur prédéterminée,
dans lequel, de préférence, le régulateur de tension (98, 98') est à sécurité intrinsèque, en particulier en topologie shunt.

8. Sous-système de transmission d'énergie (1) à sécurité intrinsèque selon la revendication 7, dans lequel en ce qu'un régulateur de tension (98, 98') propre est respectivement associé aux bornes.

9. Sous-système de transmission d'énergie (1) à sécurité intrinsèque selon l'une des revendications précédentes,
dans lequel des lignes à la masse des paires de conducteurs (31, 32, 33, 34) sont isolées dans la connexion de ligne, et ne sont réunies que dans le moyen collecteur (4), de préférence à l'intérieur d'une gaine protégée contre les inflammations, ou sont passées à travers le moyen collecteur (4) pour n'être réunies que dans l'appareil électrique (8).

10. Sous-système de transmission d'énergie à sécurité intrinsèque (1) selon l'une des revendications précédentes,
dans lequel les paires de conducteurs (31, 32, 33, 34) sont disposées dans une gaine commune, et/ou
dans lequel la connexion de ligne (2) est pourvue d'un blindage (35), dans lequel le blindage (35) est de préférence mis à la terre d'un côté, en particulier du côté de la source.

11. Système d'alimentation en énergie à sécurité intrinsèque (10), comprenant une source d'énergie (9) et un sous-système de transmission d'énergie (1), adapté pour alimenter un appareil électrique (8) dans la zone protégée contre les explosions,
dans lequel le sous-système de transmission d'énergie (1) selon l'une des revendications 1 à 10 est réalisé de manière à être à sécurité intrinsèque.

12. Système d'alimentation en énergie à sécurité intrinsèque (10) selon la revendication 11,
dans lequel la source d'énergie (9) présente plusieurs sources individuelles (91, 92, 93, 94) séparées galvaniquement,
dans lequel respectivement une source individuelle (91, 92, 93, 94) est associée à l'une des paires de conducteurs (31, 32, 33, 34),
dans lequel la source d'énergie (9) et/ou les sources individuelles (91, 92, 93, 94) présentent une résistance de sortie (99), en particulier sont limitées en courant et/ou en tension.

13. Système d'alimentation en énergie à sécurité intrinsèque (10) selon l'une des revendications 11 à 12,
dans lequel le moyen collecteur (4) est réalisé de manière à être intégré dans l'appareil électrique (8),
dans lequel, de préférence, l'appareil électrique (8) est un appareil de terrain, en particulier un capteur actif, un organe de réglage ou un régulateur d'une installation technique.

14. Système d'alimentation en énergie à sécurité intrinsèque (10) selon l'une des revendications 11 à 13,
dans lequel l'appareil électrique (8) présente un accumulateur (81), de préférence avec un régulateur de charge (61) intégré pour l'accumulateur,
dans lequel le régulateur de charge est en outre de préférence conçu sous tension.

15. Système d'alimentation en énergie à sécurité intrinsèque (10) selon la revendication 14,
dans lequel un circuit limiteur (62) est prévu, lequel
est configuré pour arrêter une charge de l'accumulateur (81) lorsqu'une valeur seuil prédéfinie, en particulier une tension maximale, est atteinte.
